Europäisches Patentamt

European Patent Office

Office européen des brevets

(19)

(11) **EP 1 061 706 A1**

(12) **EUROPEAN PATENT APPLICATION**

(43) Date of publication:
 **20.12.2000 Bulletin 2000/51**

(51) Int Cl.⁷: $H04L\ 27/36$

(21) Application number: **99830365.5**

(22) Date of filing: **14.06.1999**

(84) Designated Contracting States:
 **AT BE CH CY DE DK ES FI FR GB GR IE IT LI LU MC NL PT SE**
 Designated Extension States:
 **AL LT LV MK RO SI**

(71) Applicant: **TELEFONAKTIEBOLAGET LM ERICSSON**
 **126 25 Stockholm (SE)**

(72) Inventors:
 • **Mariotti, Marco**
  **15063 Cassano Spinola (AC) (IT)**
 • **Decanis, Carmelo**
  **27100 Pavia (IT)**

(74) Representative: **Vatti, Paolo, Dr. Ing. et al**
 **Fumero-Studio Consulenza Brevetti**
 **Franz-Joseph-Strasse 38**
 **80801 München (DE)**

(54) **System of digital phase and amplitude modulation (PSK/ASK)**

(57) A phase modulation in baseband and a RF amplitude modulation are separately performed in a system of phase and amplitude modulation (PSK/ASK) of a single information flow, by utilising discrete portions of the same information flow as a modulating signal. Preferably, a digital, standard base modulation (PSK) is implemented in baseband and the number of symbols or signals constituting the constellation alphabet is increased, by overlapping an amplitude modulation synchronous with the bit stream, directly to radiofrequency.

**FIG. 1**

EP 1 061 706 A1

**Description**

FIELD OF THE INVENTION

This invention refers to a system of phase and amplitude modulation (PSK/ASK), which allows a significant improvement of the spectral efficiency, with a small increase of the complexity of construction.

Namely, this system provides a simple way to increase spectral efficiency (i.e. to increase bit rate with the same spectrum occupancy) with a minimum impact on transmitter complexity, allowing however a working point of the same very close to the saturation, and with small requirements on phase noise, with respect to the conventional linear RF transmitters, which utilise non-circular constellations of the type M-QASK.

STATE OF ART AND RELATED PROBLEMS

The linearity of the transmission chain - particularly in the last stage of said chain, which is the power amplifier (that should be allowed to work far enough from its saturation, i.e. to exhibit a sufficient output back-off to provide amplitude modulation) - and the stability of the RF oscillator are among the most severe requirements in medium-high capacity radio systems.

In a traditional system of quadrature amplitude modulation (QAM) or in a traditional system of amplitude and phase modulation (PSK/ASK) it is possible to achieve, by ensuring a very low RF distortion and a very low phase noise, to meet quality requirements (low bit error rate - BER) for the modern telecommunication networks. However, this causes design difficulties and, accordingly, high costs.

This invention aims at achieving the same results in a much more simple way, obtaining a high increase in the spectral efficiency, a high operation flexibility and a high reliability of the system performance. Since the invention requires a very small increase of system and hardware complexity, it also lowers the production costs.

SUMMARY OF THE INVENTION

With the above aims, this invention refers to a system of phase and amplitude modulation (PSK/ASK) of a single information flow, characterised in that a phase modulation in baseband and a RF frequency modulation are performed separately by using different portions of the same information flow as a modulating signal.

Preferably, a standard, digital phase modulation (PSK) is implemented in baseband in this system of modulation and the number of symbols or signals which form the constellation alphabet is increased by overlapping a digital amplitude modulation (ASK) which is synchronous with the bit flow, directly to a radiofrequency.

Advantageously, M discrete phase-shift levels in baseband and N discrete RF levels of amplitude can be used in the same system.

The system of modulation according to the invention is effectively provided by means of a circuitry comprising in cascade a bit source, a digital phase modulator (PSK) in baseband and, in a single block, a voltage controlled oscillator, a multiplier and a power amplifier.

BRIEF DESCRIPTION OF THE DRAWINGS

The invention is now described in greater detail below, referring to the figures in the annexed drawing, wherein:

Fig. 1 is a block diagram showing the circuitry to provide the system of modulation according to the invention;
Fig. 2 shows an example of scheme or constellation, wherein the inventive system of modulation is realised, in the case of four phase levels and two amplitude levels;
Fig. 3 shows another constellation, which is similar to the previous one in Fig. 2, but wherein an additional RF phase shift by 90° is introduced; and
Figs 4 and 5 show two other examples of constellations according to the invention.

DESCRIPTION OF PREFERRED EMBODIMENTS OF THE INVENTION

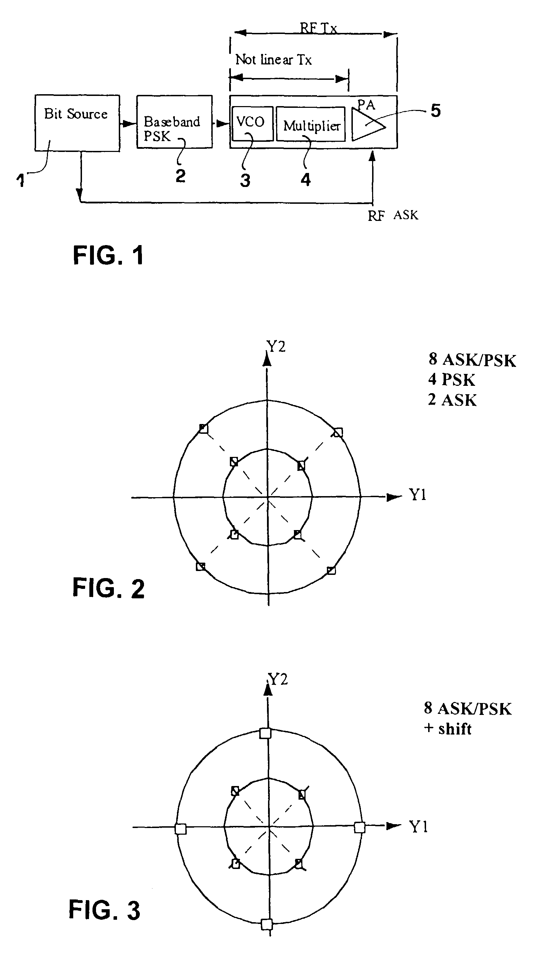

The block diagram in Fig. 1 of the annexed drawings, showing a circuitry by means of which the inventive system of modulation is provided, comprises in cascade a bit source 1, a digital phase modulator (PSK) 2 in baseband and, in a single block, a voltage controlled oscillator 3, a multiplier 4 and a power amplifier 5.

A system of phase and amplitude modulation (PSK/ASK) of a single information flow is provided through the arrangement in Fig. 1, by separately performing a phase modulation in baseband in modulator 2 and an amplitude RF modulation in the block 3, 4, 5, by using discrete portions of the same information flow as modulating signal.

More precisely, a digital standard base modulation (PSK) is implemented in baseband and the number of symbols or signals constituting the costellation alphabet is incremented, by overlapping a digital amplitude modulation (ASK), that is synchronous to the bit flow, directly to RF.

M discrete levels of baseband phase-shift and N discrete levels of RF amplitude can be used in the inventive system of modulation, conveniently providing substantially circular costellations.

Referring to the diagram in Fig. 1, one can see that the inventive system of modulation does not need the implementation of a whole chain of linear transmission with a converter, but it is enough that the final RF amplifier 5 ensures the linearity needed to perform the amplitude modulation on N levels (i.e. provides a back-off which is enough to such a purpose).

If reference is made to the system of orthogonal coordinates in Figs. 2 and 3 in a bidimensional space, that is characterised by two linearly independent functions $Y_1$ and $Y_2$, it is to be noticed that any arbitrary function can be expressed as a linear combination of said two functions.

Therefore, the baseband signal can be expressed in the form:

$$s(t) = a_1 * Y_1 + a_2 * Y_2$$

while the digital passband modulated signal can be written as:

$$s(t) = A(t) * \cos [\omega_o t + \phi (t)]$$

wherein $\omega_o$ is carrier frequency in rad/sec.

Amplitude $A(t)$ and phase $\phi(t)$ can be easily expressed in terms of base independent functions $Y_1$, $Y_2$.

It is also possible to draw the modulated signal in a bidimensional space $Y_1$, $Y_2$.

Examples of the inventive system to increase channel capacity in the easy case of a baseband phase modulation and of a RF amplitude modulation are shown in the above Figs. 2 to 5.

Fig. 2 is a simple example of an inventive modulation scheme, with four phase levels and two amplitude levels. This constellation, which is substantially circular, can be provided by using the arrangement in Fig. 1, according to the invention.

A constellation similar to the one represented in Fig. 2 is shown in Fig. 3. It can also be provided by employing the arrangement of Fig. 1 according to the invention and an additional RF phase-shift by 90° is introduced therein. In this case, it is possible to increase the distance between the symbols, so as to improve the system features as for the bit error rate (BER).

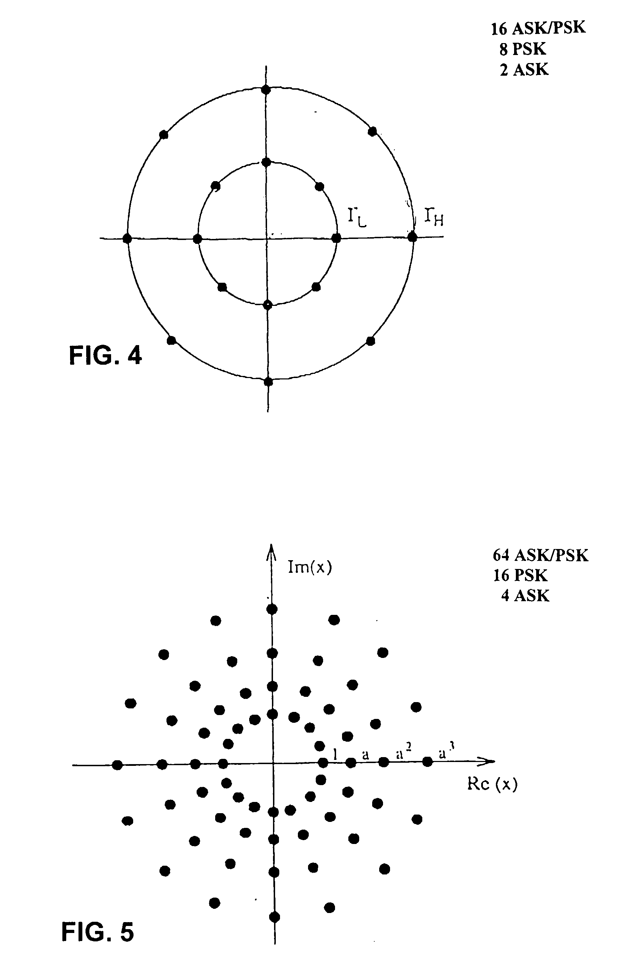

Similarly, Figs. 4 and 5 are examples of substantially circular constellations, which are similar to the ones of Figs. 2 and 3 and can be provided according to the invention through a higher number of symbols or signals.

From above, it can be understood that this invention - by separately performing a phase modulation in baseband (PSK) and a RF amplitude modulation (ASK) on the final amplifier, and by using different portions of the same information flow as modulated signal - allows to provide a non-linear transmission chain, up to the final stage. The required output back-off is just the one allowing a RF amplitude modulation; also the requirements on phase noise are closer to the ones of a simple system of phase modulation than to the ones of a linear system of quadrature amplitude modulation.

It is worth noting that - by using M levels of baseband phase-shift and N RF amplitude levels - it is possible to increase the spectral efficiency by a factor $K = (\log_2 N)/(\log_2 M)$.

Therefore, for instance, by a simple binary amplitude modulation, performed in RF, and with eight levels of baseband phase-shift, it is possible to double the number of signals from eight (3 bits/symbol) to sixteen (4 bits/symbol). An increase in spectral efficiency by 33% corresponds to that, however with a very small increase in system and hardware complexity.

Since phase and amplitude are orthogonal parameters in a modulated signal, phase modulation and demodulation and amplitude modulation and demodulation can take place independently the one of the other. In case of a scheme of M-ASK/PSK, requirements of the portion of the system RF operating as for phase noise and amplitude linearity are less severe with respect to a traditional scheme of square constellation M-QASK. This increases reliability of performance of the system according to the invention and reduces its production costs.

Flexibility is another important advantage of the inventive modulation system: it is possible to dynamically choose between the sole phase modulation (PSK) and a combination of phase and amplitude modulation (i.e. between PSK and PSK/ASK) with the same hardware, in order to dynamically balance spectral and power efficiency.

The kind of modulation can be advantageously developed in the future, since it is capable to operate directly from the baseband to radiofrequency, with no need of intermediate frequency conversions; it is virtually possible that a digital circuit and a RF microwave circuit are available, without an intermediate analog frequency.

As for demodulation, the system is still very simple: it is, indeed, enough to provide an envelope detector for recovery of amplitude information and a standard demodulator in baseband.

It is understood that embodiments and/or modifications of the system of amplitude and phase modulation other than the ones described are possible remaining in the scope of this invention. For instance, the voltage controlled oscillator 3 in the block diagram of Fig. 1 could be substituted through another member, apt to generate or to re-generate the phase modulated signal.

**Claims**

1. System of phase and amplitude modulation (PSK/ASK) of a single information flow, characterised in that a phase modulation in baseband and a RF frequency modulation are performed separately by using different portions of the same information flow as a modulating signal.

2.  System of modulation as claimed in claim 1, wherein a standard, digital phase modulation (PSK) is implemented in baseband in this system of modulation and wherein the number of symbols or signals which form the constellation alphabet is increased by overlapping a digital amplitude modulation (ASK) which is synchronous with the bit flow, directly to a radiofrequency.

3.  System of modulation as claimed in claim 1 and 2, wherein M discrete phase-shift levels in baseband and N discrete RF levels of amplitude can be used in the same system.

4.  System of modulation as claimed in any claim 1 to 3, which is provided by means of a circuitry comprising in cascade a bit source (1), a digital phase modulator (PSK) (2) in baseband and, in a single block, a voltage controlled oscillator (3), a multiplier (4) and a power amplifier (5).

**FIG. 1**

8 ASK/PSK
4 PSK
2 ASK

**FIG. 2**

8 ASK/PSK
+ shift

**FIG. 3**

16 ASK/PSK
8 PSK
2 ASK

$\Gamma_L$  $\Gamma_H$

FIG. 4

Im(x)

64 ASK/PSK
16 PSK
4 ASK

1  a  $a^2$  $a^3$

Rc (x)

FIG. 5

| | European Patent Office | EUROPEAN SEARCH REPORT | Application Number<br>EP 99 83 0365 |
|---|---|---|---|

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | WO 99 25104 A (ERICSSON TELEFON AB L M) 20 May 1999 (1999-05-20) | 1,2 | H04L27/36 |
| A | * page 5, line 9 - line 15 *<br>* page 7, line 16 - page 8, line 14 *<br>* figures 5,6 * | 3,4 | |
| X | LEPAISANT J ET AL: "CODAGE EN MODULATION DE PHASE DES EMETTEURS REGIONAUX A MODULATION D'AMPLITUDE: APPLICATION AU RADIO-GUIDAGE"<br>ONDE ELECTRIQUE,FR,EDITIONS CHIRON S.A. PARIS,<br>vol. 60, no. 10, page 33-38 XP000762760<br>ISSN: 0030-2430<br>* section III.3. *<br>* figure 9 * | 1 | |
| A | US 4 217 467 A (KOBAYASHI KAZUO ET AL) 12 August 1980 (1980-08-12)<br>* column 2, line 37 - column 3, line 20 *<br>* column 6, line 1 - line 48 *<br>* figures 4,6,8 * | 1-4 | |
| | | | TECHNICAL FIELDS SEARCHED (Int.Cl.7) |
| A | PATENT ABSTRACTS OF JAPAN<br>vol. 011, no. 023 (E-473),<br>22 January 1987 (1987-01-22)<br>& JP 61 193543 A (FUJITSU LTD),<br>28 August 1986 (1986-08-28)<br>* abstract * | 1-4 | H04L |
| A | LUCYSZYN S ET AL: "MULTI-LEVEL DIGITAL MODULATION PERFORMED DIRECTLY AT CARRIER FREQUENCY"<br>PROCEEDINGS OF THE EUROPEAN MICROWAVE CONFERENCE,GB,SWANLEY, NEXUS MEDIA,<br>vol. CONF. 25, page 673-676 XP000681807<br>ISBN: 1-899919-15-5<br>* the whole document * | 1 | |

The present search report has been drawn up for all claims

| Place of search | Date of completion of the search | Examiner |
|---|---|---|
| THE HAGUE | 26 November 1999 | Langinieux, F |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 99 83 0365

This annex lists the patent family members relating to the patent documents cited in the above-mentioned European search report.
The members are as contained in the European Patent Office EDP file on
The European Patent Office is in no way liable for these particulars which are merely given for the purpose of information.

26-11-1999

| Patent document cited in search report | | Publication date | Patent family member(s) | | Publication date |
|---|---|---|---|---|---|
| WO 9925104 | A | 20-05-1999 | AU | 1354999 A | 31-05-1999 |
| US 4217467 | A | 12-08-1980 | JP | 975503 C | 30-10-1979 |
| | | | JP | 51120110 A | 21-10-1976 |
| | | | JP | 54007656 B | 09-04-1979 |
| | | | JP | 899404 C | 25-02-1978 |
| | | | JP | 51015914 A | 07-02-1976 |
| | | | JP | 52025683 B | 09-07-1977 |
| | | | DE | 2532287 A | 12-02-1976 |
| | | | FR | 2279278 A | 13-02-1976 |
| | | | GB | 1519972 A | 02-08-1978 |
| | | | US | 4166923 A | 04-09-1979 |
| JP 61193543 | A | 28-08-1986 | NONE | | |

EPO FORM P0459

For more details about this annex : see Official Journal of the European Patent Office, No. 12/82